(19) Europäisches Patentamt
European Patent Office
Office européen des brevets

(11) **EP 0 953 004 B1**

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(21) Anmeldenummer: **98904075.3**

(22) Anmeldetag: **15.01.1998**

(51) Int Cl.[7]: **C08G 77/50**, C09D 183/14

(86) Internationale Anmeldenummer:
**PCT/EP98/00205**

(87) Internationale Veröffentlichungsnummer:
**WO 98/31727 (23.07.1998 Gazette 1998/29)**

(54) **POLYMERE ORGANOSILICIUMVERBINDUNGEN, DEREN HERSTELLUNG UND VERWENDUNG**

POLYMERIC ORGANOSILICON COMPOUNDS, THEIR PRODUCTION AND USE

COMPOSES ORGANOSILICIES POLYMERES, LEUR PRODUCTION ET LEUR UTILISATION

(84) Benannte Vertragsstaaten:
**BE DE FR GB NL**

(30) Priorität: **16.01.1997 DE 19701393**

(43) Veröffentlichungstag der Anmeldung:
**03.11.1999 Patentblatt 1999/44**

(73) Patentinhaber: **Wacker-Chemie GmbH**
**81737 München (DE)**

(72) Erfinder:
• **HERZIG, Christian**
**D-83329 Waging am See (DE)**
• **BANFIC, Robert**
**D-84508 Burgkirchen (DE)**
• **STALLBAUER, Reinhard**
**D-84367 Zeilarn (DE)**
• **DEUBZER, Bernward**
**D-84489 Burghausen (DE)**
• **HUETTNER, David**
**Tecumseh, MI 49286 (US)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 773 261**          **WO-A-97/23548**
**DE-A- 19 522 144**      **US-A- 4 043 977**
**US-A- 5 241 034**        **US-A- 5 504 175**

**Beschreibung**

Die Erfindung betrifft polymere Organosiliciumverbindungen, die Kohlenwasserstoffreste mit endständigen aliphatischen Kohlenstoff-Kohlenstoff-Doppelbindungen aufweisen, ein Verfahren zu deren Herstellung, sowie deren Verwendung in vernetzbaren Zusammensetzungen, insbesondere zur Herstellung von Klebstoff abweisenden Überzügen.

Polyadditionsreaktionen von Organopolysiloxanen mit mindestens 3 Si-gebundenen Wasserstoffatomen je Molekül mit $\alpha,\omega$-Dialkenyldiorganopolysiloxanen führen bei einem C=C/Si-H -Verhältnis von nahe 1 zu unlöslichen Netzwerken. Sollen lösliche Alkenylgruppen aufweisende Organopolysiloxane hergestellt werden, ist ein größerer Überschuß des $\alpha,\omega$-Dialkenyldiorganopolysiloxans nötig, der nach Beendigung der Polyaddition nicht entfernt werden kann und daher das Polyadditionsprodukt verdünnt.

Aus US-A 5,241,034 sind Alkenylgruppen aufweisende Siloxancopolymere bekannt, die durch Umsetzung von einer organischen Verbindung (1) mit zwei, drei oder vier endständigen aliphatischen Kohlenstoff-Kohlenstoff-Doppelbindungen mit einem Si-gebundene Wasserstoffatome aufweisenden Organopolysiloxan (2) in Gegenwart eines Hydrosilylierungskatalysators hergestellt werden. Es werden dabei Polyadditionsprodukte erhalten, worin Organopolysiloxanblöcke über Kohlenwasserstoffbrücken verbunden sind. Um ungesättigte Siloxancopolymere zu erhalten muß das Verhältnis der C=C-Doppelbindung in organischer Verbindung (1) zu Si-gebundenem Wasserstoff im Organopolysiloxan (2) immer größer als 1 sein. Das Si-gebundene Wasserstoffatome aufweisende Organopolysiloxan (2) enthält keine Alkenylreste.

In US-A 5,504,175 ist ein Verfahren zur Herstellung linearer $\alpha,\omega$-Dialkenyldiorganopolysiloxane beschrieben, bei dem ein lineares $\alpha$-Hydrogen-$\omega$-alkenyldiorganopolysiloxan mit einem linearen $\alpha,\omega$-Dialkenyldiorganosiloxan in Gegenwart eines Hydrosilylierungskatalysators umgesetzt wird. Die nach dem Verfahren hergestellten linearen $\alpha,\omega$-Dialkenyldiorganopolysiloxane können durchschnittlich nicht mehr als zwei Alkenylgruppen enthalten.

In J. Inorg. Organomet. Polymer 4(1), 61 (1994) wird ein Verfahren zur Herstellung hochverzweigter Vinylsiloxane beschrieben. Tris (dimethylvinylsiloxy) silan wird mit einem Platinkatalysator versetzt und reagiert in einer nicht kontrollierbaren Polyaddition zu Siloxanen mit hoher Vinyldichte. Tris (dimethylvinylsiloxy) silan enthält drei Vinylgruppen und ein Si-gebundenes Wasserstoffatom je Molekül. Verbindungen, die Alkenylgruppen aufweisen und frei von Si-gebundenem Wasserstoff sind, werden bei dem Verfahren nicht eingesetzt.

Es bestand die Aufgabe, polymere Organosiliciumverbindungen bereitzustellen, die verzweigt oder sternförmig sind, die durchschnittlich mehr als zwei Kohlenwasserstoffreste mit mindestens einer endständigen aliphatischen Kohlenstoff-Kohlenstoff-Doppelbindung aufweisen, die nur geringe Mengen an linearen $\alpha,\omega$-Dialkenyldiorganopolysiloxanen enthalten, die mit einem einfachen Verfahren herstellbar sind, und die mit Si-gebundenen Wasserstoffatome aufweisenden Organosiliciumverbindungen in Gegenwart von die Anlagerung von Si-gebundenem Wasserstoff an aliphatische Mehrfachbindung fördernden Katalysatoren vernetzen. Weiterhin bestand die Aufgabe, vernetzbare Zusammensetzungen bereitzustellen, die zur Herstellung von klebrige Stoffe abweisenden Überzügen geeignet sind. Die Aufgabe wird durch die Erfindung gelöst.

Gegenstand der Erfindung sind polymere Organosiliciumverbindungen, die Kohlenwasserstoffreste mit mindestens einer endständigen aliphatischen Kohlenstoff-Kohlenstoff-Doppelbindung aufweisen, herstellbar indem,

(A) polymere Organosiliciumverbindungen ausgewählt aus der Gruppe der allgemeinen Formeln

$$R^1{}_a R_{3-a} Si(R^1 RSi)_n (R_2 Si)_m SiR^1{}_a R_{3-a} \tag{I}$$

$$R^1{}_a R_{3-a} SiO(R^1 RSiO)_n (R_2 SiO)_m SiR^1{}_a R_{3-a} \tag{II}$$

und

$$R^1{}_a R_{3-a} Si\text{-}R^2\text{-}(R^1 RSi\text{-}R^2\text{-})_n (R_2 Si\text{-}R^2\text{-})_m SiR^1{}_a R_{3-a} \tag{III}$$

wobei R und $R^1$ die unten angegebene Bedeutung haben,
$R^2$ einen zweiwertigen Kohlenwasserstoffrest mit 2 bis 8 Kohlenstoffatomen bedeutet,
a gleich oder verschieden ist, 0 oder 1 ist,
n 0, 1, 2, 3 oder 4 ist und
m 0 oder eine ganze Zahl von 1 bis 1500 ist,

mit der Maßgabe, daß sie je Molekül mindestens einen endständigen Rest $R^1$ aufweisen, mit

(B) oligomeren oder polymeren Organosiliciumverbindungen, die

Einheiten der allgemeinen Formel

$$R^1R_2SiO_{1/2}$$

und Einheiten der allgemeinen Formel

$$HRSiO \text{ und/oder } HSiO_{3/2}$$

und gebenenenfalls Einheiten der allgemeinen Formel $R_2SiO$ enthalten,
wobei R gleich oder verschieden ist, einen einwertigen, gegebenenfalls substituierten Kohlenwasserstoffrest mit 1 bis 18 Kohlenstoffatomen je Rest, der frei von aliphatischen Kohlenstoff-Kohlenstoff-Doppelbindungen ist, bedeutet,
$R^1$ gleich oder verschieden ist, einen einwertigen Kohlenwasserstoffrest mit 1 bis 18 Kohlenstoffatomen je Rest, der mindestens eine endständige aliphatische Kohlenstoff-Kohlenstoff-Doppelbindung aufweist, bedeutet, mit der Maßgabe, daß die Summe der Einheiten HRSiO und $R^1R_2SiO_{1/2}$ durchschnittlich größer als 2,0 ist, wenn (B) keine Einheiten $HSiO_{3/2}$ enthält, und die Anzahl der Reste $R^1$ durchschnittlich größer ist als die Anzahl der Si-gebundenen Wasserstoffatome,
in Gegenwart von

(C) die Anlagerung von Si-gebundenem Wasserstoff an aliphatische Doppelbindung fördernde Katalysatoren

umgesetzt werden, wobei das eingesetzte Verhältnis von aliphatischer Doppelbindung in den Komponenten (A) und (B) zu Si-gebundenem Wasserstoff in der Komponente (B) 1,5 bis 10, vorzugsweise 1,5 bis 5,0, bevorzugt 1,5 bis 4,0 beträgt,
mit der Maßgabe, daß die polymeren Organosiliciumverbindungen durchschnittlich mehr als zwei Kohlenwasserstoffreste mit mindestens einer endständigen aliphatischen Kohlenstoff-Kohlenstoff-Doppelbindung enthalten.

Gegenstand der Erfindung ist weiterhin ein Verfahren zur Herstellung von polymeren Organosiliciumverbindungen, die

Kohlenwasserstoffreste mit mindestens einer endständige aliphatischen Kohlenstoff-Kohlenstoff-Doppelbindung aufweisen, dadurch gekennzeichnet, daß
(A) polymere Organosiliciumverbindungen ausgewählt aus der Gruppe der allgemeinen Formeln

$$R^1{}_aR_{3-a}Si(R^1RSi)_n(R_2Si)_mSiR^1{}_aR_{3-a} \qquad (I)$$

$$R^1{}_aR_{3-a}SiO(R^1RSiO)_n(R_2SiO)_mSiR^1{}_aR_{3-a} \qquad (II)$$

und

$$R^1{}_aR_{3-a}Si\text{-}R^2\text{-}(R^1RSi\text{-}R^2\text{-})_n(R_2Si\text{-}R^2\text{-})_mSiR^1{}_aR_{3-a} \qquad (III)$$

wobei R und $R^1$ die unten angegebene Bedeutung haben,
$R^2$ einen zweiwertigen Kohlenwasserstoffrest mit 2 bis 8 Kohlenstoffatomen bedeutet,
a gleich oder verschieden ist, 0 oder 1 ist,
n 0, 1, 2, 3 oder 4 ist und
m 0 oder eine ganze Zahl von 1 bis 1500 ist,

mit der Maßgabe, daß sie je Molekül mindestens einen endständigen Rest $R^1$ aufweisen, mit

(B) oligomeren oder polymeren Organosiliciumverbindungen, die
Einheiten der allgemeinen Formel

$$R^1R_2SiO_{1/2}$$

und Einheiten der allgemeinen Formel

$$HRSiO \text{ und/oder } HSiO_{3/2}$$

und gebenenenfalls Einheiten der allgemeinen Formel $R_2SiO$ enthalten,
wobei R und $R^1$ die oben dafür angegebene Bedeutung haben, mit der Maßgabe, daß die Summe der Einheiten $HRSiO$ und $R^1R_2SiO_{1/2}$ durchschnittlich größer als 2,0 ist, wenn (B) keine Einheiten $HSiO_{3/2}$ enthält, und die Anzahl der Reste $R^1$ durchschnittlich größer ist als die Anzahl der Si-gebundenen Wasserstoffatome,
in Gegenwart von

(C) die Anlagerung von Si-gebundenem Wasserstoff an aliphatische Doppelbindung fördernde Katalysatoren

umgesetzt wird, wobei das eingesetzte Verhältnis von aliphatischer Doppelbindung in den Komponenten (A) und (B) zu Si-gebundenem Wasserstoff in der Komponente (B) 1,5 bis 10, vorzugsweise 1,5 bis 5,0, bevorzugt 1,5 bis 4,0 beträgt,
mit der Maßgabe, daß die so erhaltenen polymeren Organosiliciumverbindungen durchschnittlich mehr als zwei Kohlenwasserstoffreste mit mindestens einer endständigen aliphatischen Kohlenstoff-Kohlenstoff-Doppelbindung enthalten.

Gegenstand der Erfindung ist weiterhin ein Verfahren zur Herstellung von polymeren Organosiliciumverbindungen, die Kohlenwasserstoffreste mit mindestens einer endständigen aliphatischen Kohlenstoff-Kohlenstoff-Doppelbindung aufweisen, dadurch gekennzeichnet, daß

(A) polymere Organosiliciumverbindungen ausgewählt aus der Gruppe der allgemeinen Formeln

$$R^1{}_aR_{3-a}Si(R^1RSi)_n(R_2Si)_mSiR^1{}_aR_{3-a} \tag{I}$$

$$R^1{}_aR_{3-a}SiO(R^1RSiO)_n(R_2SiO)_mSiR^1{}_aR_{3-a} \tag{II}$$

und

$$R^1{}_aR_{3-a}Si\text{-}R^2\text{-}(R^1RSi\text{-}R^2\text{-})_n(R_2Si\text{-}R^2\text{-})_mSiR^1{}_aR_{3-a} \tag{III}$$

wobei R und $R^1$ die unten angegebene Bedeutung haben,
$R^2$ einen zweiwertigen Kohlenwasserstoffrest mit 2 bis 8 Kohlenstoffatomen bedeutet,
a gleich oder verschieden ist, 0 oder 1 ist,
n 0, 1, 2, 3 oder 4 ist und
m 0 oder eine ganze Zahl von 1 bis 1500 ist,
mit der Maßgabe, daß sie je Molekül mindestens einen endständigen Rest $R^1$ aufweisen, mit

(B) oligomeren oder polymeren Organosiliciumverbindungen, die
Einheiten der allgemeinen Formel

$$R^1R_2SiO_{1/2}$$

und Einheiten der allgemeinen Formel

$$HRSiO \text{ und/oder } HSiO_{3/2}$$

und gebenenenfalls Einheiten der allgemeinen Formel $R_2SiO$ enthalten,

wobei R und $R^1$ die oben dafür angegebene Bedeutung haben, mit der Maßgabe, daß die Summe der Einheiten $HRSiO$ und $R^1R_2SiO_{1/2}$ durchschnittlich größer als 2,0 ist, wenn (B) keine Einheiten $HSiO_{3/2}$ enthält, und die Anzahl der Reste $R^1$ durchschnittlich größer ist als die Anzahl der Si-gebundenen Wasserstoffatome,

in Gegenwart von

(C) die Anlagerung von Si-gebundenem Wasserstoff an aliphatische Doppelbindung fördernde Katalysatoren

umgesetzt wird, wobei das eingesetzte Verhältnis von aliphatischer Doppelbindung in den Komponenten (A) und (B) zu Si-gebundenem Wasserstoff in der Komponente (B) 1,5 bis 10, vorzugsweise 1,5 bis 5,0, bevorzugt 1,5 bis 4,0 beträgt,

mit der Maßgabe, daß die so erhaltenen polymeren Organosiliciumverbindungen durchschnittlich mehr als zwei Kohlenwasserstoffreste mit mindestens einer endständigen aliphatischen Kohlenstoff-Kohlenstoff-Doppelbindung enthalten.

Die erfindungsgemäßen, polymeren Organosiliciumverbindungen besitzen vorzugsweise eine Viskosität von 20 bis 2 000 000 mPa·s bei 25°C, bevorzugt 100 bis 500 000 mPa.s bei 25°C.

Bevorzugt enthalten die erfindungsgemäßen polymeren Organosiliciumverbindungen Kohlenwasserstoffreste mit mindestens einer endständigen aliphatischen Kohlenstoff-Kohlenstoff- Doppelbindung in einer solchen Anzahl, daß sie durchschnittlich 2,5 bis 50 endständige aliphatische Kohlenstoff-Kohlenstoff-Doppelbindungen aufweisen.

Die erfindungsgemäßen, polymeren Organosiliciumverbindungen weisen vorzugsweine Jodzahlen zwischen 0,5 bis 40, bevorzugt 1,0 bis 20 auf, wobei die Jodzahl die bei der Addition an die Doppelbindung verbrauchte Jodmenge in Gramm pro 100 Gramm eingesetztes, erfindungsgemäßes Organopolysiloxan angibt.

Die Organosiliciumverbindungen der Formel (I), (II) oder (III), die als Komponente (A) eingesetzt werden, können auch in geringem Umfang, vorzugsweise weniger als 5 Mol-%, T- oder Q-Einheiten, sowie bifunktionelle Brük-ken oder trifunktionelle organische Verzweigungsstellen enthalten.

Die Organopolysiloxane der Formel (II) besitzen vorzugsweise eine Viskosität von 1 bis 100 000 mm$^2$/s bei 25°C.

Verfahren zur Herstellung der Organopolysiloxane der Formel (II) sind dem Fachmann bekannt.

Beispiele für den Rest R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, sowie der α-und der β-Phenylethylrest.

Bei dem Rest R handelt es sich bevorzugt um den Methylrest.

Beispiele für substituierte Reste R sind halogenierte Reste und durch ein oder mehrere Ethersauerstoffatome unterbrochene Reste.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für substituierte Reste R sind durch ein oder mehrere Ethersauerstoffatome unterbrochene Reste, wie der 2-Methoxyethyl- und der 2-Ethoxyethylrest.

Beispiele für Reste $R^1$ sind der Vinyl-, Allyl-, 3-Butenyl-, 5-Hexenyl-, 7-Octenyl-, 9-Decenyl- und der 11-Dodecenylrest, wobei der Vinyl- und der 5-Hexenylrest bevorzugt sind und der Vinylrest besonders bevorzugt ist.

Beispiele für Reste $R^2$ sind solche der Formel $-CH_2CH_2-$, $-CH(CH_3)-$, $-(CH_2)_4-$, $-(CH_2)_5-$, $-(CH_2)_6-$, $-(CH_2)_8-$, $-(CH_2)_{10}-$, $-(CH_2)_{12}-$, wobei die Reste der Formel $-CH_2CH_2-$, $-CH(CH_3)-$, $-(CH_2)_6-$, $-(CH_2)_8-$ bevorzugt sind und der Rest der Formel $-CH_2CH_2-$ besonders bevorzugt ist.

Bei dem erfindungsgemäßen Verfahren können als Komponente (A) organische Verbindungen der allgemei-nen Formel

$$Y\,(CH{=}CH_2)_x \qquad\qquad (IV)$$

wobei Y ein ein-, zwei-, drei- oder vierwertiger, bevorzugt ein zwei- oder dreiwertiger, Kohlenwasserstoffrest mit 1 bis 28 Kohlenstoffatomen, der durch ein oder mehrere Sauerstoff-, Silicium-, Bor- oder Titanatome unterbrochen sein kann oder eine oder mehrere $-CO_2$-Gruppen enthält, bedeutet und x 1, 2, 3 oder 4, bevorzugt 2 oder 3 ist, eingesetzt werden.

Beispiele für x = 1 sind 1-Penten, 1-Hexen, 1-Octen, 1-Dodecen, 1-Tetradecen und 1-Octadecen, sowie Ethylenglycolallylmethylether, Allylpropylether, Vinylbutylether und Butyl-5-hexenylether, sowie Trimethylvinylsilan, Tributylvinyltitan Essigsäureallylester, Dimethylvinylbutoxysilan, Diethylvinylmethoxysilan und Triethoxyvinylsilan.

Beispiele für x = 2 sind 1,5-Hexadien, 1,7-Octadien, Diallylether, Didodecenylether, Divinyldimethylsilan, Butyldiallylbor, Undecensäurevinylester und Adipinsäurediallylester.

Beispiele für x = 3 sind 1,2,4-Trivinylcyclohexan, 3,5-Dimethyl-4-vinyl-1,6-heptadien, Pentaerythrittriallylether, Methyltrivinylsilan, Triallylbor und Benzoltricarbonsäuretriallylester.

Beispiele für x = 4 sind Tetravinylcyclobutan und Tetravinylsilan.

Vorzugsweise enthält Komponente (B) Einheiten der allgemeinen Formel $HRSiO$, $R^1R_2SiO_{1/2}$ und gegebenenfalls $R_2SiO$, wobei R und $R^1$ die oben dafür angegebene Bedeutung haben. Wenn Komponente (B) Einheiten der Formel $HSiO_{3/2}$ enthält, was nicht bevorzugt ist, liegt schon eine Verzweigung vor.

Bei dem erfindungsgemäßen Verfahren werden als Komponente (B) bevorzugt Organopolysiloxane der allgemeinen Formel

$$(R^1{}_bR_{3-b}SiO_{1/2})_{2+r}(R^1RSiO)_o(HRSiO)_p(R_2SiO)_q(HSiO_{3/2})r \qquad\qquad (V)$$

wobei R und $R^1$ die oben dafür angegebene Bedeutung haben,

b gleich oder verschieden ist, 0 oder 1, insbesondere 1 ist,

o 0, 1, 2 oder 3, insbesondere 0 oder 1 ist,

p 1, 2 oder 3, insbesondere 1 oder 2 ist,

q 0 oder eine ganze Zahl von 1 bis 100, insbesondere 10 bis 80

ist, und r 0, 1 oder 2, insbesondere 0 oder 1 ist, eingesetzt,

mit der Maßgabe, daß

die Summe b+p durchschnittlich größer als 2,0 ist, wenn r

gleich 0 ist, und die Anzahl der Reste $R^1$ durchschnittlich

größer ist als die Anzahl der Si-gebundenen Wasserstoff tome.

Bei dem erfindungsgemäßen Verfahren werden als Komponente (B) besonders bevorzugt Organopolysiloxane der allgemeinen Formel

$$R^1{}_bR_{3-b}SiO(R^1RSiO)_o(HRSiO)_p(R_2SiO)_qSiR^1{}_bR_{3-b} \qquad\qquad (VI)$$

wobei R und $R^1$ die oben dafür angegebene Bedeutung haben,

b gleich oder verschieden ist, 0 oder 1, insbesondere 1 ist,

o 0, 1, 2 oder 3, insbesondere 0 oder 1 ist,

p 1, 2 oder 3, insbesondere 1 oder 2 ist,

q 0 oder eine ganze Zahl von 1 bis 100, insbesondere 10 bis 80

ist, eingesetzt, mit der Maßgabe, daß

die Summe b+p durchschnittlich größer als 2,0 ist und die Anzahl der Reste $R^1$ durchschnittlich größer ist als die Anzahl der Si-gebundenen Wasserstoffatome.

Die als Komponente (B) eingesetzten Organopolysiloxane enthalten vorzugsweise 1 bis 4 Reste $R^1$, bevorzugt durchschnittlich 1,5 bis 3,0 Reste $R^1$, sowie bevorzugt durchschnittlich 0,8 bis 1,5 Si-gebundene Wasserstoffatome.

Die Komponente (B) enthält vorzugsweise durchschnittlich mindestens 1,3, bevorzugt durchschnittlich mindestens 1,5 mal so viele Reste $R^1$ wie Si-gebundene Wasserstoffatome.

Die Komponente (B) besitzt vorzugsweise eine Viskosität von 5 bis 150 $mm^2/s$ bei 25 °C.

Organopolysiloxane der Formel (V) werden hergestellt durch Equilibrieren von Organopolysiloxanen mit endständigen Einheiten der Formel $R^1R_2SiO_{1/2}$ und gegebenenfalls $R_3SiO_{1/2}$ mit Organopolysiloxanen mit Si-gebundenen Wasserstoffatomen in HRSiO- und/oder $HSiO_{3/2}$-Einheiten, wobei R und $R^1$ die oben dafür angegebene Bedeutung haben.

Als die Anlagerung von Si-gebundenem Wasserstoff an aliphatische Doppelbindung fördernde Katalysatoren (C) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (C) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6^*6H_2O$, $Na_2PtCl_4^*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6^*6H_2O$ und Cyclohexanon, Platin-Vinylsiloxankomplexe, wie Platin-1,3-Divinyl-1,1,3,3-tetramethyldisiloxan- komplexe mit oder ohne Gehalt an nachweisbarem anorganisch gebundenem Halogen, Bis- (gamma-picolin) -platindichlorid, Trimethylendipyridinplatindichlorid, Dicyclopentadienplatindichlorid, Dimethylsulfoxydethylenplatin- (II)-dichlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Der Katalysator (C) wird vorzugsweise in Mengen von 1 bis 100 Gew.-ppm (Gewichtsteilen je Million Gewichtsteilen), bevorzugt in Mengen von 4 bis 20 Gew.-ppm, jeweils berechnet als elementares Platin und bezogen auf das Gesamtgewicht der Komponenten (A) und (B), verwendet.

Das erfindungsgemäße Verfahren wird vorzugsweise beim Druck der umgebenden Atmosphäre, also etwa bei 1020 hPa (abs.), durchgeführt, er kann aber auch bei höheren oder niedrigeren Drücken durchgeführt werden. Ferner wird das erfindungsgemäße Verfahren vorzugsweise bei einer Temperatur von 50°C bis 150°C, bevorzugt 60°C bis 120°C, durchgeführt.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Die gegebenenfalls mitverwendeten inerten organischen Lösungsmittel werden anschließend destillativ entfernt. Hochpolymere Produkte bleiben bevorzugt im inerten Lösungsmittel gelöst.

Eine bevorzugte Variante des Herstellungsverfahrens ist das Zudosieren der Komponente (B) zu einer Lösung des Katalysators (C) in Komponente (A) bei einer Temperatur von 40 bis 120°C, bzw. bei Verwendung von Lösungsmitteln im Temperaturbereich unterhalb deren Siedepunkte.

Eine weitere bevorzugte Variante ist das Mischen der Komponenten (A) und (B), gegebenenfalls unter Verwendung von Lösungsmitteln, mit nachfolgender Zugabe des Katalysators (C), wonach das homogene Gemisch auf Reaktionstemperatur erwärmt wird.

Das erfindungsgemäße Verfahren kann absatzweise, halbkontinuierlich oder vollkontinuierlich durchgeführt werden.

Die erfindungsgemäßen, polymeren Organosiliciumverbindungen können mit Si-gebundenen Wasserstoffatome aufweisenden Organopolysiloxanen in Gegenwart von Hydrosilylierungskatalysatoren vernetzt werden. Weiterhin können die erfindungsgemäßen, polymeren Organosiliciumverbindungen auch mit Mercaptogruppen aufweisenden organischen Polymeren vernetzt werden.

Die erfindungsgemäßen, polymeren Organosiliciumverbindungen werden vorzugsweise in vernetzbaren Zusammensetzungen, die

(1) erfindungsgemäße polymere Organosiliciumverbindungen oder die nach dem erfindungsgemäßen Verfahren hergestellten polymeren Organosiliciumverbindungen,
(2) Si-gebundene Wasserstoffatome aufweisende Organosiliciumverbindungen,
(3) die Anlagerung von Si-gebundenem Wasserstoff an aliphatische Mehrfachbindung fördernde Katalysatoren und gegebenenfalls
(4) die Anlagerung von Si-gebundenem Wasserstoff an aliphatische Mehrfachbindung bei Raumtemperatur verzögernde Mittel enthalten, verwendet.

Die die erfindungsgemäßen, polymeren Organosiliciumverbindungen enthaltenden vernetzbaren Zusammensetzungen werden vorzugsweise zur Herstellung von klebrige Stoffe abweisenden Überzügen, z. B. zur Herstellung von Trennpapieren, verwendet.

Die Herstellung der mit dem Trennpapier verbundenen Selbstklebematerialien erfolgt nach dem off-line Verfahren oder dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt.

Bei den erfindungsgemäßen Zusammensetzungen kann eine Art von polymere Organosiliciumverbindung (1) oder verschieden Arten von polymeren Organosiliciumverbindungen (1) eingesetzt werden.

Bei lösungsmittelfreien Zusammensetzungen enthalten die polymeren Organosiliciumverbindungen (1) bevorzugt 2,5 bis 6, besonders bevorzugt 2,5 bis 5 endständige aliphatische Kohlenstoff-Kohlenstoff- Doppelbindungen. Bei lösungsmittelhaltigen Zusammensetzungen enthalten die polymeren Organosiliciumverbindungen (1) bevorzugt 5 bis 150, besonders bevorzugt 8 bis 40 endständige aliphatische Kohlenstoff-Kohlenstoff- Doppelbindungen.

Als Bestandteil (2) können auch bei den erfindungsgemäßen Zusammensetzungen die gleichen Si-gebundene Wasserstoffatome aufweisenden Organosiliciumverbindungen verwendet werden, die bei allen bisher bekannten Zusammensetzungen aus aliphatisch ungesättigte Kohlenwasserstoffreste, wie Vinylgruppen, aufweisenden Organosiliciumverbindungen, Si-gebundene Wasserstoffatome aufweisenden Organosiliciumverbindungen und die Anlagerung von Si-gebundenem Wasserstoff an aliphatische Mehrfachbindung fördernde Katalysatoren eingesetzt werden konnten.

Als Bestandteil (2) werden vorzugsweise Organopolysiloxane aus Einheiten der Formel

$$H_e R_f SiO_{\frac{4-(e+f)}{2}},$$

wobei R die oben dafür angegebene Bedeutung hat,
e 0 oder 1,
f 0, 1, 2 oder 3 und
die Summe e+f nicht größer als 3 ist,
bevorzugt solche der Formel

$$H_g R_{3-g} SiO(SiR_2O)_k (SiRHO)_l SiR_{3-g} H_g$$

wobei R die oben dafür angegebene Bedeutung hat,
g O oder 1
k O oder eine ganze Zahl von 1 bis 100 und
l O oder eine ganze Zahl von 1 bis 100 ist,
oder Si-gebundene Wasserstoffatome aufweisende Organosiliciumverbindungen, wie sie in der deutschen Anmeldung mit dem Aktenzeichen 196 02 663.6 der Anmelderin beschrieben sind
oder Mischungen aus den oben genannten Organopolysiloxanen und Organosiliciumverbindungen
verwendet.

Vorzugsweise enthalten die Organopolysiloxane (2) mindestens 3 Si-gebundene Wasserstoffatome.

Beispiele für Organopolysiloxane (2) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxanund Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Verfahren zum Herstellen von Organosiliciumverbindungen (2), auch von solchen Organopolysiloxanen (2) der bevorzugten Art, sind allgemein bekannt.

Organosiliciumverbindungen (2) werden vorzugsweise in Mengen von 0,5 bis 6, bevorzugt 1 bis 3, besonders bevorzugt 1,5 bis 2,5 Grammatom Si-gebundenen Wasserstoffs je Mol Rest $R^1$ in den polymeren Organosiliciumverbindungen (1) eingesetzt.

Als die Anlagerung von Si-gebundenem Wasserstoff an aliphatische Mehrfachbindung fördernde Katalysatoren (3) können auch bei den erfindungsgemäßen Zusammensetzungen die gleichen Katalysatoren verwendet werden, die auch bei den bisher bekannten Zusammensetzungen zum Vernetzen von aliphatische Mehrfachbindungen enthaltenden Organosiliciumverbindungen mit Verbindungen, die Si-gebundenen Wasserstoff enthalten, zur Förderung der Vernetzung eingesetzt werden konnten. Als Bestandteil (3) werden vorzugsweise die oben genannten Katalysatoren (C) verwendet.

Katalysator (3) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Organopolysiloxane (1) und (2) eingesetzt.

Als die Anlagerung von Si-gebundenem Wasserstoff an aliphatische Mehrfachbindung bei Raumtemperatur verzögernde Mittel, sogenannte Inhibitoren (4), können auch bei den erfindungsgemäßen Zusammensetzungen alle Inhibitoren gegebenenfalls verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol Inhibitoren gemäß US-A 2,476,166, wie eine Mischung aus Diallylmaleinat und Vinylacetat, und Inhibitoren gemäß US 4,504,645, wie Maleinsäuremonoester.

Vorzugsweise wird der Inhibitor (4) in Mengen von 0,001 bis 10 Gew.-%, bezogen auf das Gesamtgewicht der Organopolysiloxane (1) und (2), eingesetzt.

Beispiele für weitere Bestandteile, die bei den erfindungsgemäßen Zusammensetzungen mitverwendet werden können, sind Mittel zur Einstellung der Trennkraft, Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^3 (CH_3)_2 SiO_{1/2} \text{ und } SiO_2 \text{ ,}$$

sogenannte MQ-Harze, wobei $R^3$ ein Wasserstoffatom, ein Methylrest oder $R^1$ bedeutet und die Einheiten der Formel $R^3(CH_3)_2SiO_{1/2}$ gleich oder verschieden sein können. Das Verhältnis von Einheiten der Formel $R^3(CH_3)_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organopolysiloxane (1) und (2), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus aliphatisch ungesättigte Kohlenwasserstoffreste aufweisenden Organopolysiloxanen, Si-gebundenen Wasserstoff aufweisenden Organopolysiloxanen und die Anlagerung von Si-gebundenem Wasserstoff an aliphatische Doppelbindung fördernde Katalysatoren verwendet werden konnten. Beispiele für solche Lösungsmittel sind Benzine, z. B. Alkangemische mit einem Siedebereich von 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der polymeren Organosiliciumverbindungen (1), eingesetzt.

Die Reihenfolge beim Vermischen der Bestandteile (1), (2), (3) und gegebenenfalls (4) ist zwar nicht entscheidend, für die Praxis hat es sich jedoch bewährt, den Bestandteil (3), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarctbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendige Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Herstellung der Komponente (B) :

a) Komponente B-1

1167 g eines Equilibrats aus Dimethylsiloxy- und Vinyldimethylsiloxyeinheiten mit der Jodzahl 22 werden mit 32,5 g eines Hydrolysats aus Hydrogenmethyldichlorsilan, das mit Trimethylsiloxyeinheiten terminiert ist und eine Kettenlänge von ca. 40 Si-Einheiten hat, bei 145 °C mit 100 ppm PNCl$_2$ equilibriert. Der Katalysator wird durch MgO desaktiviert, flüchtige Bestandteile bei 140 °C und 3 hPa entfernt. Man erhält ein Polysiloxan mit durchschnittlich 1,9 Vinyldimethylsiloxy- und 1,1 Hydrogenmethylsiloxyeinheiten pro Molekül und einer Viskosität von 32 mm$^2$/s bei 25°C.

b) Komponente B-2

Folgende Siloxane werden mit 75 ppm PNCl$_2$ bei 145 °C equilibriert:

1400 g eines trimethylsiloxy-terminierten Dimethylpolysiloxans mit einer Viskosität von 10000 mm$^2$/s bei 25°C, 100 g Divinyltetramethyldisiloxan und
80 g eines trimethylsiloxy-terminierten Equilibrats aus gleichmolaren Mengen Dimethylsiloxy- und Hydrogenmethylsiloxyeinheiten mit einer Viskosität von 70 mm$^2$/s bei 25°C.

Die Aufarbeitung erfolgt entsprechend der Herstellung der Komponente B-1. Man erhält ein Polymer mit Si-gebundenen Vinylgruppen und Si-gebundenen Wasserstoffatomen, das durchschnittlich 1,8 Vinyldimethylsiloxy- und 1,0 Hydrogenmethylsiloxygruppen pro Molekül und eine Viskosität von 72 mm$^2$/s bei 25°C aufweist.

c) Komponente B-3

Bei 145°C werden folgende Siloxane mit 75 ppm PNCl$_2$ equilibriert:

360 g eines trimethylsiloxy-terminierten Dimethylpolysiloxans mit einer Viskosität von 5000 mm$^2$/s bei 25°C, 1 240 g eines vinyl-terminierten Dimethylpolysiloxans der Jodzahl 22 und
80 g eines trimethylsiloxy-terminierten Equilibrats aus gleichmolaren Mengen Dimethylsiloxy- und Hydrogenmethylsiloxyeinheiten mit einer Viskosität von 70 mm$^2$/s bei 25°C.

Nach Aufarbeitung erhält man ein Polymer mit Si-gebundenen Vinylgruppen und Si-gebundenen Wasserstoffatomen, das durchschnittlich 1,9 Vinyldimethylsiloxy- und 1,0 Hydrogenmethylsiloxygruppen pro Molekül und eine Viskosität von 47 mm$^2$/s bei 25°C aufweist.

d) Komponente B-4

Die Herstellungsvorschrift für Komponente B-3 wird wiederholt, aber mit der Änderung, daß nun statt 360 g des Siloxans mit der Viskosität von 5000 mm$^2$/s bei 25°C 1500 g eines Siloxans mit der Viskosität von 10 000 mm$^2$/s bei 25°C eingesetzt werden.

Das von flüchtigen Bestandteilen befreite Produkt weist eine Viskosität von 108 mm$^2$/s bei 25°C und durchschnittlich 1,8 Vinyldimethylsiloxy- und 1,0 Hydrogenmethylsiloxygruppen pro Molekül auf.

Beispiel 1:

Eine Lösung von 252 g eines $\alpha,\omega$-Divinyldimethylpolysiloxans mit ca. 160 Siloxyeinheiten pro Kette in 380 ml Cyclohexan wird mit 10 mg Platin in Form eines Platin-1,3-Divinyl-1,1,3,3-tetramethyldisiloxan-Komplexes, des sogenannten Karstedt-Katalysators, der im folgenden dem Katalysator entspricht, wie er nach US-A 3,775,452 hergestellt wird, aktiviert und auf 86 °C erwärmt bis leichtes Rückflußsieden eintritt. Über einen Zeitraum von 2,5 Stunden werden insgesamt 322 g Komponente B-1, dessen Herstellung oben beschrieben ist, gleichmäßig zudosiert.

Die klare homogene Produktlösung wird in Vakuum (3 hPa) und bei 160 °C von Cyclohexan befreit. Man erhält 551 g eines klaren hochviskosen Öl mit 11300 mPa.s bei 25°C und einer Jodzahl von 7. Das Polymer enthält pro kg 275 mMol Vinylgruppen in Form von Dimethylvinylsiloxyeinheiten; Si-gebundener Wasserstoff ist nicht mehr nachweisbar. Das Polymer besitzt ein mittels Gel-Permeationschromatographie bestimmtes durchschnittliches Molekulargewicht von 33000 und enthält durchschnittlich 9 CH$_2$=CH(CH$_3$)$_2$SiO$_{1/2}$-Einheiten pro Molekül.

Beispiel 2:

Man katalysiert 106 g eines Equilibrats aus Dimethylsiloxyund Vinyldimethylsiloxyeinheiten mit der Jodzahl 22 mit 3 mg Platin in Form des Karstedt-Katalysators und erwärmt auf 120 °C. Innerhalb 2,5 Stunden werden 200 g Komponente B-1, deren Herstellung oben beschrieben ist, gleichmäßig zudosiert, das Reaktionsgemisch im Vakuum bis 140 °C von flüchtigen Bestandteilen befreit. Man erhält ein Polyadditionsprodukt mit einer Viskosität von 320 mm$^2$/s bei 25°C und einer Jodzahl von 13, entsprechend einem Vinylgehalt von 510 mMol Vinylgruppen pro kg. Es enthält keinen nachweisbaren Si-gebundenen Wasserstoff. Das Polymer besitzt ein mittels Gel-Permeationschromatographie bestimmtes durchschnittliches Molekulargewicht von 8000 und enthält durchschnittlich 4 CH$_2$=CH(CH$_3$)$_2$SiO$_{1/2}$-Einheiten pro Molekül.

Beispiel 3:

Beispiel 2 wird wiederholt, indem nur die Hälfte der Komponente B-1 zudosiert wird. Nach analoger Aufarbeitung erhält man ein Polymer mit einer Viskosität von 79 mm$^2$/s bei 25°C und einer Jodzahl von 15. Das Polymer besitzt ein mittels Gel-Permeationschromatographie bestimmtes durchschnittliches Molekulargewicht von 4200 und enthält durchschnittlich 2,5 CH$_2$=CH(CH$_3$)$_2$SiO$_{1/2}$-Einheiten pro Molekül.

Vergleichsversuch 1:

Die Komponente B-1 wird ohne Zusatz einer Komponente A bei 23°C mit Karstedt-Katalysator aktiviert, so daß die Platinkonzentration 10 ppm beträgt. Die gerührte Lösung erwärmt sich langsam auf 31 °C und wird laufend viskoser. Nach wenigen Minuten ist das Siliconöl geliert und nicht mehr fließfähig. Das feste Polyadditionsprodukt ist unlöslich und zur Herstellung von thermisch vernetzenden Massen nicht mehr geeignet.

Vergleichsversuch 2:

Die Komponente B-2, deren Herstellung oben beschrieben ist, wird, wie in Vergleichsversuch 1 beschrieben, mit Karstedt-Katalysator aktiviert. Die Viskosität steigt stetig an bis ebenfalls ein unlösliches Gel erhalten wird.

Beispiel 4:

75 g eines $\alpha,\omega$-Divinyldimethylpolysiloxans mit der Viskosität von 100 000 mPa.s bei 25°C (enthält 2,0 mequ.

Vinyl) werden in 175 g Toluol verdünnt und wie in.Beispiel 2 mit der gleichen Menge des Platinkatalysators versetzt. Bei 102°C werden in ca. 2 Stunden insgesamt 250 g einer 30%igen Lösung von Komponente B-3, deren Herstellung oben beschrieben ist konstant zudosiert, wobei die Gesamtmenge von Si-gebundenem Wasserstoff 25 mequ. beträgt, also im Durchschnitt 25 Moleküle B-3 auf ein vorgelegtes Molekül A addiert werden. Nach einer weiteren halben Stunde bei 102°C läßt man abkühlen. Die Polymerlösung hat eine Viskosität von 240 mm$^2$/s bei 25°C und enthält 49 mMol Vinylgruppen pro kg. Das Polymer besitzt ein mittels Gel-Permeationschromatographie bestimmtes durchschnittliches Molekulargewicht von 120000 und enthält durchschnittlich 20 $CH_2{=}CH(CH_3)_2SiO_{1/2}$-Einheiten pro Molekül.

Beispiel 5:

Die Hälfte der Polymerlösung des Produktes aus Beispiel 4 (250 g) wird erneut auf 102°C erwärmt und in zwei Stunden wiederum Komponente B-3 als 30%ige Lösung (215 g) zudosiert, so daß die Gesamtmenge des zusätzlich dosierten Si-gebundenem Wasserstoffs 21.5 mequ. beträgt. Identische Nachreaktion ergibt letztlich eine Polymerlösung mit einer Viskosität von 914 mm$^2$/s bei 25°C und einem Gehalt von 68 mMol Vinylgruppen pro kg. Insgesamt wurden damit auf das in Beispiel 4 vorgelegte Molekül durchschnittlich 68 Moleküle B-3 addiert. Die Polymerlösung zeigt gleichmäßiges Fließverhalten und keinerlei Gelanteile. Sie ist mit Kohlenwasserstoffen beliebig zu homogenen Lösungen verdünnbar. Das Polymer besitzt ein mittels Gel-Permeationschromatographie bestimmtes durchschnittliches Molekulargewicht von 200000 und enthält durchschnittlich 47 $CH_2{=}CH(CH_3)_2SiO_{1/2}$-Einheiten pro Molekül.

Beispiel 6:

264 g der Komponente B-4, deren Herstellung oben beschrieben wurde, werden mit 9,3 g 1,3-Divinyltetramethyldisiloxan homogen vermischt, worauf man 1,5 mg Pt in Form des Karstedt-Katalysators zufügt. Das Reaktionsgemisch wird ca. eine Stunde auf 120°C erwärmt. Man erhält ein verzweigtes Pfropfpolymer mit einer Viskosität von 280 mm$^2$/s bei 25°C und einer Jodzahl von 13,5. Das Polymer besitzt ein mittels Gel-Permeationschromatographie bestimmtes durchschnittliches Molekulargewicht von 7400 und enthält durchschnittlich 4 $CH_2{=}CH(CH_3)_2SiO_{1/2}$-Einheiten pro Molekül.

Vergleichsversuch 3:

Das Beispiel 6 wird wiederholt, ohne daß 1,3-Divinyltetramethyldisiloxan zugemischt wird. Der Ansatz wird beim Erwärmen sehr viskos und geht dann in ein unlösliches Gel über.

Vergleichsversuch 4:

Statt der Komponente B-1 in Beispiel 1 verwendet man eine vinylfreie, aber sonst gleiche Version, also ein Siloxan, das nur Trimethylsiloxyendgruppen enthält, welche nicht erfindungsgemäß ist. Nach Aufarbeitung erhält man ein Polymer mit einer Viskosität von 730 mm$^2$/s bei 25°C, das laut $^1$H-NMR-Spektrum keine Vinylgruppen mehr hat.

Beispiel 7:

Die folgenden Bestandteile einer Rezeptur zur Herstellung von Trennbeschichtungen werden nacheinander gemischt:

| | |
|---|---|
| 21,9 g | Polymer aus Beispiel 6 |
| 55 mg | 1-Ethinylcyclohexanol |
| 1,4 g | Vernetzer* |
| 220 mg | Pt-Katalysator** (=2,2 mg Platin) |

* Equilibrat aus Hydrogenmethylsiloxy- und Trimethylsiloxyein heiten mit einer Viskosität von 18 mm$^2$/s bei 25°C

** Lösung eines Platin-1,3-Divinyl-1,1,3,3-tetramethyldi siloxankomplexes in linearem $\alpha,\omega$-Divinyldimethylpolysiloxan mit einem Platingehalt von 1 %.

Die Mischung hat bei 25°C eine Gelzeit von ca. 70 Stunden. Auf superkalandriertes Papier wird mittels eines Glasstabes eine Beschichtung mit ca. 4 µm Stärke aufgebracht und im Umluftofen bei 90°C ausgehärtet.

|  | Strichtest | Substrathaftung |
|---|---|---|
| 3 Sekunden Aushärtezeit | 1-2 | 1-2 |
| 5 Sekunden Aushärtezeit | 1 | 1 |

1 = beste Bewertung, 6 = schlechteste Bewertung

Nach 5 Sekunden bei 90°C wurde eine absolut strichfreie Beschichtung mit hervorragender Substrathaftung erhalten. Isotherme Härtung unter statischen Bedingungen wurde mittels DSC-Messung(DSC = Differential Scanning Calorimetry) bei 80°C gemessen: exothermer Peak nach 6,3 Minuten mit insgesamt 44 J/g Wärmetönung.

**Patentansprüche**

1. Polymere Organosiliciumverbindungen, die Kohlenwasserstoffreste mit mindestens einer endständigen aliphatischen Kohlenstcff-Kohlenstoff-Doppelbindung aufweisen, herstellbar indem,

   (A) polymere Organosiliciumverbindungen ausgewählt aus der Gruppe der allgemeinen Formeln

$$R^1_a R_{3-a} Si(R^1 RSi)_n (R_2 Si)_m SiR^1_a R_{3-a} \qquad \text{(I)}$$

$$R^1_a R_{3-a} SiO(R^1 RSiO)_n (R_2 SiO)_m SiR^1_a R_{3-a} \text{ und} \qquad \text{(II)}$$

$$R^1_a R_{3-a} Si\text{-}R^2\text{-}(R^1 RSi\text{-}R^2\text{-})_n (R_2 Si\text{-}S^2\text{-})_m SiR^1_a R_{3-a} \qquad \text{(III)}$$

   wobei R und $R^1$ die unten angegebene Bedeutung haben,
   $R^2$ einen zweiwertigen Kohlenwasserstoffrest mit 2 bis 8 Kohlenstoffatomen bedeuten,
   a gleich oder verschieden ist, 0 oder 1 ist,
   n 0, 1, 2, 3 oder 4 ist und
   m 0 oder eine ganze Zahl von 1 bis 1500 ist,

   mit der Maßgabe, daß sie je Molekül mindestens einen endständigen Rest $R^1$ aufweisen, mit
   (B) oligomeren oder polymeren
       Organosiliciumverbindungen, die Einheiten der allgemeinen Formel

$$R^1 R_2 SiO_{1/2}$$

   und Einheiten der allgemeinen Formel

$$HRSiO \text{ und/oder } HSiO_{3/2}$$

   und gegebenenfalls Einheiten der allgemeinen Formel

$$R_2 SiO$$

   enthalten,
   wobei R gleich oder verschieden ist, einen einwertigen, gegebenenfalls substituierten Kohlenwasserstoffrest mit 1 bis 18 Kohlenstoffatomen je Rest, der frei von aliphatischen Kohlenstoff-Kohlenstoff-Doppelbindungen ist, und
   $R^1$ gleich oder verschieden ist, einen einwertigen Kohlenwasserstoffrest mit 1 bis 18 Kohlenstoffacomen je Rest, der mindestens eine endständige aliphatische Kohlenstoff-Kohlenstoff-Doppelbindung aufweist, bedeutet,

mit der Maßgabe, daß die Summe der Einheiten HRSiO und $R^1R_2SiO_{1/2}$ durchschnittlich größer als 2,0 ist, wenn (B) keine Einheiten $HSiO_{3/2}$ enthält, und die Anzahl der Reste $R^1$ durchschnittlich größer ist als die Anzahl der Si-gebundenen Wasserstoffatome,
in Gegenwart von
(C) die Anlagerung von Si-gebundenem Wasserstoff an aliphatische Doppelbindung fördernde Katalysatoren umgesetzt werden, wobei das eingesetzte Verhältnis von aliphatischer Doppelbindung in den Komponenten (A) und (B) zu Si-gebundenem Wasserstoff in der Komponente (B) 1,5 bis 10 beträgt,
mit der Maßgabe, daß die polymeren Organosiliciumverbindungen durchschnittlich mehr als zwei Kohlenwasserstoffreste mit mindestens einer endständigen aliphatischen Kohlenstoff-Kohlenstoff-Doppelbindung enthalten.

2. Polymere Organosiliciumverbindungen nach Anspruch 1, dadurch gekennzeichnet, daß als Komponente (A) organopolysiloxane der allgemeinen Formel

$$R^1_aR_{3-a}SiO(R^1RSiO)_n(R_2SiO)_mSiR^1_aR_{3-a} \qquad (II)$$

wobei R und $R^1$ die im Anspruch 1 angegebene Bedeutung haben,
a 1 und n 0, 1 oder 2 ist, eingesetzt werden.

3. Polymere Organosiliciumverbindungen nach Anspruch 1,
dadurch gekennzeichnet, daß als Komponente (A) organische Verbindungen der allgemeinen Formel

$$Y (CH=CH_2)_x \qquad (IV)$$

wobei Y ein ein-, zwei-, drei- oder vierwertiger Kohlenwasserstoffrest mit 1 bis 28 Kohlenstoffatomen, der durch ein oder mehrere Sauerstoff-, Silicium-, Bor- oder Titanatome unterbrochen sein kann oder eine oder mehrere-$CO_2$-Gruppen enthält, bedeutet und
x 1, 2, 3 oder 4 ist, eingesetzt werden.

4. Polymere Organosiliciumverbindungen nach Anspruch 1, dadurch gekennzeichnet, daß als Komponente (B) Organopolysiloxane der allgemeinen Formel

$$R^1_bR_{3-b}SiO(R^1RSiO)_o(HRSiO)_p(R_2SiO)_qSiR^1_bR_{3-b} \qquad (VI)$$

wobei R und $R^1$ die in Anspruch 1 angegebene Bedeutung haben,
b gleich oder verschieden ist, 0 oder 1 ist,
o 0, 1, 2 oder 3 ist,
p 1, 2 oder 3 ist und
q 0 oder eine ganze Zahl von 1 bis 100 ist,
mit der Maßgabe, daß die Summe b+p durchschnittlich größer als 2,0 ist und die Anzahl der Reste $R^1$ durchschnittlich größer ist als die Anzahl der Si-gebundenen Wasserstoffatome, eingesetzt werden.

5. Polymere Organosiliciumverbindungen nach Anspruch 4, dadurch gekennzeichnet, daß

b 1, o 0 oder 1 und p 1 oder 2 ist,
mit der Maßgabe, daß die Summe b+p durchschnittlich größer als 2,0 ist und die Anzahl der Reste $R^1$ durchschnittlich größer ist als die Anzahl der Si-gebundenen
Wasserstoffatome.

6. Verfahren zur Herstellung von polymeren Organosiliciumverbindungen nach einem der Ansprüche 1 bis 5, dadurch gekennzeichnet, daß

(A) Verbindungen, die mindestens eine endstandige aliphatische Kohlenstoff-Kohlenstoff-Doppelbindung je Molekül enthalten, mit

(B) oligomeren oder polymeren
Organosiliciumverbindungen, die Einheiten der allgemeinen Formel

$$R^1R_2SiO_{1/2}$$

und Einheiten der allgemeinen Formel

$$HRSiO \text{ und/oder } HSiO_{3/2}$$

und gegebenenfalls Einheiten der allgemeinen Formel

$$R_2SiO$$

enthalten,
wobei R und $R^1$ die im Anspruch 1 angegebene Bedeutung haben,
mit der Maßgabe, daß die Summe der Einheiten HRSiO und $R^1R_2SiO_{1/2}$ durchschnittlich größer als 2,0 ist, wenn (B) keine Einheiten $HSiO_{3/2}$ enthält, und die Anzahl der Reste $R^1$ durchschnittlich größer ist als die Anzahl der Si-gebundenen Wasserstoffatome,
in Gegenwart von
(C) die Anlagerung von Si-gebundenem Wasserstoff an aliphatische Doppelbindung fördernde Katalysatoren umgesetzt werden, wobei das eingesetzte Verhältnis von aliphatischer Doppelbindung in den Komponenten (A) und (B) zu Si-gebundenem Wasserstoff in der Komponente (B) 1,5 bis 10 beträgt,
mit der Maßgabe, daß die so erhaltenen polymeren Organosiliciumverbindungen durchschnittlich mehr als zwei Kohlenwasserstoffreste mit mindestens einer endständigen aliphatischen Kohlenstoff-Kohlenstoff-Doppelbindung enthalten.

**7.** Vernetzbare Zusammensetzungen enthaltend

(1) polymere Organosiliciumverbindungen nach einem der Ansprüche 1 bis 5 oder hergestellt nach Anspruch 6
(2) Si-gebundene Wasserstoffatome aufweisende Organosiliciumverbindungen,
(3) die Anlagerung von Si-gebundenem Wasserstoff an aliphatische Mehrfachbindung fördernde Katalysatoren und gegebenenfalls
(4) die Anlagerung von Si-gebundenem Wasserstoff an aliphatische Mehrfachbindung bei Raumtemperatur verzögernde Mittel.

**8.** Verwendung der vernetzbaren Zusammensetzungen nach Anspruch 7 zur Herstellung von klebrige Stoffe abweisenden Überzügen.

**Claims**

**1.** A polymeric organosilicon compound which contains hydrocarbon radicals having at least one terminal aliphatic carbon-carbon double bond, preparable by reacting

(A) polymeric organosilicon compounds selected from the group of the general formulae

$$R^1{}_aR_{3-a}Si\,(R^1RSi)_n(R_2Si)_mSiR^1{}_aR_{3-a} \qquad (I)$$

$$R^1{}_aR_{3-a}SiO\,(R^1RSiO)_n(R_2SiO)_mSiR^1{}_aR_{3-a} \qquad (II)$$

and

**15**

$$R^1{}_a R_{3-a}Si\text{-}R^2\text{-}(R^1RSi\text{-}R^2\text{-})_n(R_2Si\text{-}R^2\text{-})mSiR^1{}_a R_{3-a} \tag{III},$$

where R and $R^1$ are as defined below,

$R^2$ is a divalent hydrocarbon radicals having 2 to 8 carbon atoms,
a is identical or different at each occurrence and is 0 or 1,
n is 0, 1, 2, 3 or 4, and
m is 0 or an integer from 1 to 1500,
with the proviso that they contain at least one terminal radical $R^1$ per molecule, with

(B) oligomeric or polymeric organosilicon compounds

which comprise units of the general formula

$$R^1R_2SiO_{1/2}$$

and units of the general formula

$$HRSiO \text{ and/or } HSiO_{3/2}$$

and, if desired, units of the general formula

$$R_2SiO,$$

where R is identical or different at each occurrence and is a monovalent, substituted or unsubstituted hydrocarbon radical having 1 to 18 carbon atoms per radical, which is free from aliphatic carbon-carbon double bonds,
$R^1$ is identical or different at each occurrence and is a monovalent hydrocarbon radical having 1 to 18 carbon atoms per radical, which contains at least one terminal aliphatic carbon-carbon double bond, with the proviso that the sum of the units HRSiO and $R^1R_2SiO_{1/2}$ is on average greater than 2.0 if (B) contains no units $HSiO_{3/2}$, and the number of radicals $R^1$ is on average greater than the number of Si-bonded hydrogen atoms,
in the presence of

(C) catalysts which promote the addition of Si-bonded hydrogen onto aliphatic double bond, the ratio of aliphatic double bond in components (A) and (B) to Si-bonded hydrogen in component (B) that is employed being from 1.5 to 10, with the proviso that the polymeric organosilicon compound contains on average more than two hydrocarbon radicals having at least one terminal aliphatic carbon-carbon double bond.

2. A polymeric organosilicon compound as claimed in claim 1, wherein as component (A) organopolysiloxanes of the general formula

$$R^1{}_a R_{3-a}SiO(R^1RSiO)_n(R_2SiO)_mSiR^1{}_a R_{3-a} \tag{II}$$

where R and $R^1$ are as defined in claim 1,
a is 1 and n is 0, 1 or 2 are employed.

3. A polymeric organosilicon compound as claimed in claim 1, wherein as component (A) organic compounds of the general formula

$$Y\,(CH=CH_2)_x \tag{IV}$$

are employed, where Y is a mono-, di-, tri- or tetra- valent hydrocarbon radical having 1 to 28 carbon atoms, which can be interrupted by one or more oxygen, silicon, boron or titanium atoms or contains one or more $-CO_2$-groups, and

x is 1, 2, 3 or 4.

4. A polymeric organosilicon compound as claimed in claim 1, wherein as component (B) organopolysiloxanes of the general formula

$$R^1_b R_{3-b} SiO(R^1 RSiO)_o (HRSiO)_p (R_2 SiO)_q SiR^1_b R_{3-b} \tag{VI}$$

are employed, where R and $R^1$ are as defined in claim 1, b is identical or different at each occurrence and is 0 or 1,

o is 0, 1, 2 or 3,
p is 1, 2 or 3, and
q is 0 or an integer from 1 to 100,

with the proviso that the sum b+p is on average greater than 2.0, and the number of radicals $R^1$ is on average greater than the number of Si-bonded hydrogen atoms.

5. A polymeric organosilicon compound as claimed in claim 4, wherein
b is 1, o is 0 or 1 and p is 1 or 2,
with the proviso that the sum b+p is on average greater than 2.0 and the number of radicals $R^1$ is on average greater than the number of Si-bonded hydrogen atoms.

6. A process for preparing a polymeric organosilicon compound as claimed in any of claims 1 to 5, which comprises reacting

(A) compounds which contain at least one terminal aliphatic carbon-carbon double bond per molecule with
(B) oligomeric or polymeric organosilicon compounds which comprise units of the general formula

$$R^1 R_2 SiO_{1/2}$$

and units of the general formula

$$HRSiO \text{ and/or } HSiO_{3/2}$$

and, if desired, units of the general formula

$$R_2 SiO,$$

where R and $R^1$ are as defined in claim 1
with the proviso that the sum of the units HRSiO and $R^1 R_2 SiO_{1/2}$ is on average greater than 2.0 if (B) contains no units $HSiO_{3/2}$, and the number of radicals $R^1$ is on average greater than the number of Si-bonded hydrogen atoms,
in the presence of
(C) catalysts which promote the addition of Si-bonded hydrogen onto aliphatic double bond,
the ratio of aliphatic double bond in components (A) and (B) to Si-bonded hydrogen in component (B) that is employed being from 1.5 to 10, with the proviso that the resulting polymeric organosilicon compound contains on average more than two hydrocarbon radicals having at least one terminal aliphatic carbon-carbon double bond.

7. A crosslinkable composition comprising

(1) a polymeric organosilicon compound as claimed in any of claims 1 to 5 or prepared as in claim 6,
(2) organosilicon compounds containing Si-bonded hydrogen atoms,
(3) catalysts which promote the addition of Si-bonded hydrogen onto aliphatic multiple bond and, if desired,
(4) agents which retard the addition of Si-bonded hydrogen onto aliphatic multiple bond at room temperature.

**8.** The use of a crosslinkable composition as claimed in claim 7 for preparing coatings which repel tacky substances.

**Revendications**

**1.** Composés organosiliciés polymères qui présentent des radicaux hydrocarbonés comprenant au moins une double liaison carbone-carbone aliphatique en position terminale, pouvant être préparés en transformant des composés organosiliciés polymères (A)choisis parmi le groupe de formules générales

$$R^1_a R_{3-a} Si(R^1 RSi)_n (R_2 Si)_m SiR^1_a R_{3-a} \tag{I}$$

$$R^1_a R_{3-a} SiO(R^1 RSiO)_n (R_2 SiO)_m SiR^1_a R_{3-a} \tag{II}$$

et

$$R^1_a R_{3-a} Si-R^2 -(R^1 RSi-R^2-)_n (R_2 Si-R^2-)_m SiR^1_a R_{3-a} \tag{III}$$

où R et $R^1$ ont la signification indiquée ci-dessous, $R^2$ signifie un radical hydrocarboné divalent comprenant 2 à 8 atomes de carbone,
a est identique ou différent et égal à 0 ou 1,
n est égal à 0, 1, 2, 3 ou 4 et
m représente 0 ou un nombre entier de 1 à 1500, sous réserve qu'ils présentent au moins un radical $R^1$ en position terminale par molécule, avec
des composés organosiliciés oligomères ou polymères (B), qui contiennent des unités de formule générale $R^1 R_2 SiO_{1/2}$
et des unités de formule générale
HRSiO et/ou $HSiO_{3/2}$
et, le cas échéant, des unités de formule générale $R_2 SiO$ où R est identique ou différent à chaque fois et signifie un radical hydrocarboné monovalent, le cas échéant substitué, comprenant 1 à 18 atomes de carbone par radical, qui est exempt de doubles liaisons carbone-carbone aliphatiques et
$R^1$ est identique ou différent et signifie un radical hydrocarboné monovalent comprenant 1 à 18 atomes de carbone par radical, qui présente au moins une double liaison carbone-carbone aliphatique en position terminale, sous réserve que la somme des unités HRSiO et $R^1 R_2 SiO_{1/2}$ soit en moyenne supérieure à 2,0 lorsque (B) ne contient pas d'unités $HSiO_{3/2}$ et que le nombre de radicaux $R^1$ soit en moyenne supérieur au nombre d'atomes d'hydrogène liés par Si,
en présence
de catalyseurs (C) qui favorisent la fixation d'hydrogène lié par Si sur la double liaison aliphatique, le rapport utilisé de double liaison aliphatique dans les composants (A) et (B) à hydrogène lié par Si dans le composant (B) étant de 1,5 à 10, sous réserve que les composés organosiliciés polymères contiennent en moyenne plus de deux radicaux hydrocarbonés comprenant au moins une double liaison carbone-carbone aliphatique en position terminale.

**2.** Composés organosiliciés polymères selon la revendication 1, caractérisés en ce qu'on utilise comme composant (A) des organopolysiloxanes de formule générale

$$R^1_a R_{3-a} SiO(R^1 RSiO)_n (R_2 SiO)_m SiR^1_a R_{3-a} \tag{II}$$

où R et $R^1$ ont la signification indiquée dans la revendication 1,
a est égal à 1 et n est égal à 0, 1 ou 2.

**3.** Composés organosiliciés polymères selon la revendication 1, caractérisés en ce qu'on utilise comme composant (A) des composés organiques de formule générale

$$Y(CH=CH_2)_x \qquad\qquad (IV)$$

où Y signifie un radical hydrocarboné monovalent, divalent, trivalent ou quadrivalent comprenant 1 à 28 atomes de carbone, qui peut être interrompu par un ou plusieurs atomes d'oxygène, de silicium, de bore ou de titane ou qui contient un ou plusieurs groupements $-CO_2-$ et
x est égal à 1, 2, 3 ou 4.

**4.** Composés organosiliciés polymères selon la revendication 1, caractérisés en ce qu'on utilise comme composant (B) des organopolysiloxanes de formule générale

$$R^1{}_bR_{3-b}SiO(R^1RSiO)_o(HRSiO)_p(R_2SiO)_qSiR^1{}_bR_{3-b} \qquad\qquad (VI)$$

où R et $R^1$ ont la signification indiquée dans la revendication 1
b est identique ou différent et égal à 0 ou 1,
o est égal à 0, 1, 2 ou 3,
p est égal à 1, 2 ou 3 et
q est égal à 0 ou un nombre entier de 1 à 100, sous réserve que la somme b+p soit en moyenne supérieure à 2,0 et que le nombre de radicaux $R^1$ soit en moyenne supérieur au nombre d'atomes d'hydrogène liés par Si.

**5.** Composés organosiliciés polymères selon la revendication 4, caractérisés en ce que
b est égal à 1, o est égal à 0 ou et p est égal à 1 ou 2, sous réserve que la somme b+p soit en moyenne supérieure à 2,0 et que le nombre de radicaux $R^1$ soit en moyenne supérieur au nombre d'atomes d'hydrogène liés par Si.

**6.** Procédé pour la préparation de composés organosiliciés polymères selon l'une quelconque des revendications 1 à 5, comprenant
des composés réactifs (A) qui contiennent au moins une double liaison carbone-carbone aliphatique en position terminale par molécule avec,
des composés organosiliciés oligomères ou polymères (B), qui contiennent des unités de formule générale $R^1R_2SiO_{1/2}$ et des unités de formule générale
HRSiO et/ou $HSiO_{3/2}$
et, le cas échéant, des unités de formule générale $R_2SiO$ où R et $R^1$ ont la signification indiquée dans la revendication 1, sous réserve que la somme des unités HRSiO et/ou $R^1R_2SiO_{1/2}$ soit en moyenne supérieure à 2,0, lorsque (B) ne contient pas d'unités $HSiO_{3/2}$ et que le nombre de radicaux $R^1$ soit en moyenne supérieur au nombre d'atomes d'hydrogène liés par Si,
en présence
de catalyseurs (C) qui favorisent la fixation d'hydrogène lié par Si sur la double liaison aliphatique, le rapport utilisé de double liaison aliphatique dans les composants (A) et (B) à hydrogène lié par Si dans le composant (B) étant de 1,5 à 10, sous réserve que les composés organosiliciés polymères obtenus contiennent en moyenne plus de deux radicaux hydrocarbonés comprenant au moins une double liaison carbone-carbone aliphatique en position terminale.

**7.** Compositions réticulables contenant

(1) des composés organosiliciés polymères selon l'une quelconque des revendications 1 à 5 ou préparés selon la revendication 6,
(2) des composés organosiliciés présentant des atomes d'hydrogène liés par Si,
(3) des catalyseurs favorisant la fixation d'hydrogène lié par Si sur la liaison multiple aliphatique et, le cas échéant,
(4) des agents retardant la fixation d'hydrogène lié par Si sur la liaison multiple aliphatique à température ambiante.

8. Utilisation des compositions réticulables selon la revendication 7 pour la préparation de revêtements repoussant des substances adhésives.